Europäisches Patentamt

European Patent Office

Office européen des brevets

(19)

(11) Veröffentlichungsnummer : **0 095 052
B1**

## EUROPÄISCHE PATENTSCHRIFT

(12)

(45) Veröffentlichungstag der Patentschrift :
02.12.87

(21) Anmeldenummer : 83104154.6

(22) Anmeldetag : 28.04.83

(51) Int. Cl.⁴ : **F 16 J  1/16**, F 16 N  7/36,
F 01 M  1/06

(54) Kolben-Pleuel-Verbindung für Hubkolben-Verbrennungsmotoren.

(30) Priorität : 08.05.82 DE 3217352
11.05.82 DE 3217595

(43) Veröffentlichungstag der Anmeldung :
30.11.83 Patentblatt 83/48

(45) Bekanntmachung des Hinweises auf die Patenterteilung : 02.12.87 Patentblatt 87/49

(84) Benannte Vertragsstaaten :
DE FR GB IT

(56) Entgegenhaltungen :
EP-A- 0 065 642
DE-A- 1 014 387
DE-C- 1 287 385
FR-A-  366 918
FR-A- 2 126 711
GB-A-  406 516
US-A- 2 990 226

(73) Patentinhaber : **MAHLE GMBH
Pragstrasse 26-46 Postfach 50 07 69
D-7000 Stuttgart 50 (DE)**

(72) Erfinder : **Bauer, Manfred
Ricarda Huchstrasse 27
D-7140 Ludwigsburg (DE)**
Erfinder : **Feucht, Jürgen, Dipl. Ing.
Laienweg 29
D-7300 Esslingen (DE)**
Erfinder : **Gessinger, Werner, Dipl. Ing.
Egerstrasse 2
D-7014 Kornwestheim (DE)**
Erfinder : **Lingenhölin, Dieter
Rosmarinweg 122
D-7000 Stuttgart 50 (DE)**

(74) Vertreter : **Pfusch, Volker, Dipl.-Ing.
MAHLE GMBH Patentabteilung Pragstrasse 26-46
Postfach 50 07 69
D-7000 Stuttgart 50 (DE)**

## Beschreibung

Die Erfindung betrifft eine Kolben-Pleuel-Verbindung für Hubkolben- Verbrennungsmotoren nach dem Oberbegriff des Anspruchs 1 bzw. des Anspruchs 9.

Eine solche Kolben-Pleuel-Verbindung ist aus FR-A-366 918 bekannt.

Die im Pleuelkopflager vorgesehenen Längsnuten haben den Zweck, das unter Druck in das Pleuel eingeführte Öl an die Naben des Kolbens heranzuführen, um diese dadurch zusätzlich zu kühlen und zu schmieren.

Hiervon ausgehend liegt der Erfindung die Aufgabe zugrunde, insbesondere die Kühlwirkung noch weiter zu verbessern. Dabei soll die zu erzielende Kühlung nicht allein auf den Nabenbereich beschränkt bleiben, sondern soll vielmehr auch noch die Kolbenbereiche oberhalb der Naben mit erfassen.

Eine Lösung dieser Aufgabe gibt die Ausführungsform nach den kennzeichnenden Merkmalen des Anspruchs 1 wieder. Dabei besteht der Grundgedanke für eine verbesserte Ölkühlung darin, einen möglichst engen Abstand zwischen Pleuelkopfseitenflächen und angrenzenden Kolbennaben vorzusehen und das Kühlöl durch gezielt angeordnete Spaltbereiche bevorzugt an bestimmte Bereiche des Kolbens heranzuführen. Dies wird dadurch erzielt, daß das Öl durch eine die angegebene spezielle gegenseitige Abstimmung der Lagen der Längsnuten im Pleuelkopfauge und derjenigen der Taschen in den Bolzennaben zu einem großen Teil direkt in diese Taschen gelangt und damit eine intensive Kühlung in diesen mechanisch besonders hoch beanspruchten Nabenbereichen bewirkt.

In dem Stand der Technik sind zwar z. B. aus US-A-29 90 226 taschenartige Ausnehmungen in den Bolzennaben eines Kolbens bekannt, nicht jedoch in dem erfindungsgemäßen Zusammenspiel mit auf diese ausgerichteten ölführenden Längsnuten in der Pleuelkopfbohrung.

Bei den Lösungen nach den Ansprüchen 2 und 9 bewirkt der größere Abstand zwischen Pleuelkopfseitenflächen und angrenzenden Naben in dem Bereich oberhalb der Kolbenbolzen, daß das Kühlöl hauptsächlich diesen Bereich durchströmt und nicht denjenigen unterhalb der Bolzenachse. Dies ist wichtig, da ja gerade im oberen Kolbenbereich die abzuführende Wärme besonders groß ist. Das Erfordernis einer möglichst hohen Wärmeabführung ergibt sich daraus, daß mit steigender Wärme die mechanische Festigkeit des Nabenwerkstoffes, der insbesondere Leichtmetall ist, absinkt und es bei Überschreiten bestimmter Temperaturgrenzwerte zu Rissen im Zenitbereich der Naben kommen kann. Die Größe und die Form der nicht an der Führung teilhabenden Bereiche ist nach dem jeweils vorliegenden Wärmeverlauf an den Naben von Fall zu Fall konkret festzulegen.

In manchen Fällen, besonders, wenn in den Kolbennaben keine taschenartigen Ausnehmungen vorgesehen sind, ist es allerdings zweckmäßig nach Anspruch 3 oder 10 den gesamten oberhalb der durch die Kolbenbolzenachse verlaufenden Horizontalebene liegenden Raum als nicht an der Fuhrung teilhabenden Bereich zwischen Pleuel und Kolbennaben auszubilden.

Dabei soll dann entsprechend Anspruch 4 bzw. 11 der Abstand zwischen den Pleuelkopfseiten und den Naben auf jeder Seite in den nicht an der Führung teilhabenden Bereichen mindestens 25 % größer sein als in den an der Führung teilnehmenden Bereichen und einen Wert von 0,75 mm nicht überschreiten. Der Abstand zwischen den Führungsflächen liegt dabei nach Anspruch 5 bzw. 12 zwischen 0,05 und 0,15 mm.

Eine besonders vorteilhafte Ausgestaltung beinhaltet Anspruch 6. Durch den Ringkanal nach diesem Anspruch wird das aus den Längsnuten austretende Öl so über den gesamten oberen Bereich der Pleuelaugenseiten verteilt, daß dort über den gesamten angrenzenden Bolzennabenbereich eine noch bessere Kühl- und Schmierwirkung erzielt wird.

Für einen zusätzlichen Kühlungseffekt im Kolbenbodenbereich sorgen radial verlaufende Kanäle an den seitlichen oberen Ringkanalbegrenzungsflächen im Pleuelauge oder in den Bolzennaben gemäß Anspruch 7.

Für die gewünschte Kühlung und Schmierung der Bolzennaben erweist es sich im übrigen auch noch als recht günstig, bei den über die gesamte Breite der Bolzennabenbohrung verlaufenden taschenartigen Ausnehmungen radial hinter den den Kolbenbolzen festlegenden Sicherungsringen Freistiche gemäß Anspruch 8 vorzusehen. Dadurch ist das Öl in der Lage, die taschenartigen Ausnehmungen zu durchströmen, wobei die sich dadurch ergebende Erhöhung des Ölstromes zu einer Steigerung der Kühlwirkung führt. Das an den Enden des Kolbenbolzens aus den taschenartigen Ausnehmungen der Nabenbohrung austretende Öl fließt in den Kurbelraum zurück. Für ein ungehindertes Abfließen des über die Kolbenbolzenenden austretenden Öls können am Kolbenschaft entsprechende Vorkehrungen getroffen werden. Als Freistich kann z. B. für eine der Längsnuten die für die Montage des Sicherungsringes erforderliche Aushebenut am Ende der Nabenbohrung verwendet werden. Weiterhin kann anstelle. eines besonderen Freistiches für eine der Längsnuten auch der Stoßspalt des Sicherungsringes verwendet werden, wenn der Sicherungsring gegen Verdrehen fixiert ist und der Stoß genau in die Längsnut gelegt wird.

Ausführungsbeispiele der Erfindung sind in der Zeichnung dargestellt. Es zeigen

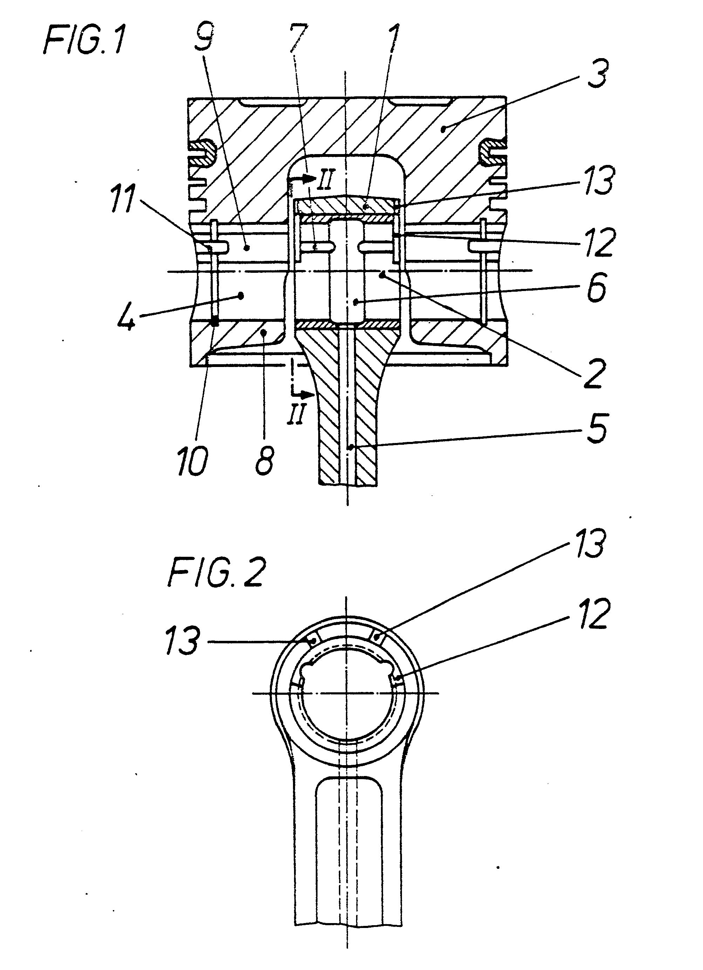

Fig. 1 einen Längsschnitt durch eine Pleuel-Kolben-Verbinddung mit einem ringförmig ausgebildeten nicht an der Pleuelführung teilhabenden Bereich zwischen Pleuelkopf und jeweils angrenzenden Kolbennaben

Fig. 2 einen Schnitt nach Linie II-II in Fig.1

Fig. 3 einen Längsschnitt durch eine Pleuel-Kolben-Verbindung mit oberhalb der Bolzenachse an der Führung des Pleuels an den Kolbennaben insgesamt nicht teilhabendem Bereich

Fig. 4 einen Schnitt nach Linie IV-IV in Fig. 3.

In das Pleuelauge 1 gelangt das Kühlöl über die Bohrung 5 in der Pleuelstange, die das Öl in die Ringnut 6 der Bohrung 2 des Pleuelauges 1 führt. Mit dem Kolben 3 ist das Pleuelauge 1 über einen nicht dargestellten Kolbenbolzen verbunden. Dieser nicht dargestellte Kolbenbolzen lagert in der Bohrung 4 der Kolbenbolzennaben 8. Aus der Ringnut 6 in dem Pleuelauge 1 gelangt das Öl über die Längsnuten 7 an die Bolzennaben 8. Die Bohrungen 4 der Bolzennaben 8 enthalten taschenartige Ausnehmungen 9. Die Lage der Längsnuten 7 ist in dem Pleuelauge so gewählt, daß die Längsnuten 7 die taschenartigen Ausnehmungen 9 bei Auslenkung des Pleuels überstreichen. Der nicht dargestellte Kolbenbolzen ist in Bolzenachsrichtung durch Sicherungsringe 10 festgelegt. Damit das längs der taschenartigen Ausnehmungen 9 geführte Öl durch die Sicherungsringe 10 nicht am Weiterfluß zur Zylinderwand gehindert wird, sind radial hinter den die Sicherungsringe aufnehmenden Ringnuten Freistiche 11 vorgesehen. Die Ovalität des Kolbenschaftes ist in Richtung der Bolzenachse so ausgelegt, daß durch die taschenartigen Ausnehmungen 9 durchtretendes Öl an dem Kolbenschaft vorbei in den Kurbelraum abfließen kann.

In den Bereichen, in denen zwischen den Pleuelkopfseitenflächen und den Kolbenbolzennaben 8 die Führung des Pleuelauges 1 erfolgt, mißt der Abstand zwischen den Führungsflächen auf jeder Seite des Pleuelauges 1 etwa 0,1 mm.

An den Seitenflächen des Pleuelauges 1 ist jeweils ein zu den Kolbenbolzennaben 8 hin offener Ringkanal 12 vorgesehen. Dieser Ringkanal 12 erstreckt sich über den zum Kolbenboden weisenden Bereich zwischen den Längsnuten 7. Zusätzlich ragt er noch ein wenig über die Längsnuten 7 hinaus, damit er auch bei maximaler Ausschwenkung des Pleuels noch gerade zumindest einem Teil der taschenartigen Ausnehmungen 9 gegenüberliegt.

Der auf seinem Umfang weitgehendst geschlossene Ringkanal 12 sorgt dafür, daß das Kühlöl sich gezielt über den bevorzugt zu kühlenden Kolbenbolzennabenbereich verteilen kann, wobei es gleichzeitig gut in die taschenartigen Ausnehmungen 9 in den Kolbenbolzennaben 8 eintreten kann.

Im oberen dem Kolbenboden zugewandten Pleuelaugenbereich können in den Seitenflächen der Pleuelaugen 1 radiale Kanäle 13 vorgesehen sein, die das Kühlöl dann aus dem Bereich des Kanals 12 gezielt in Richtung Kolbenboden führen.

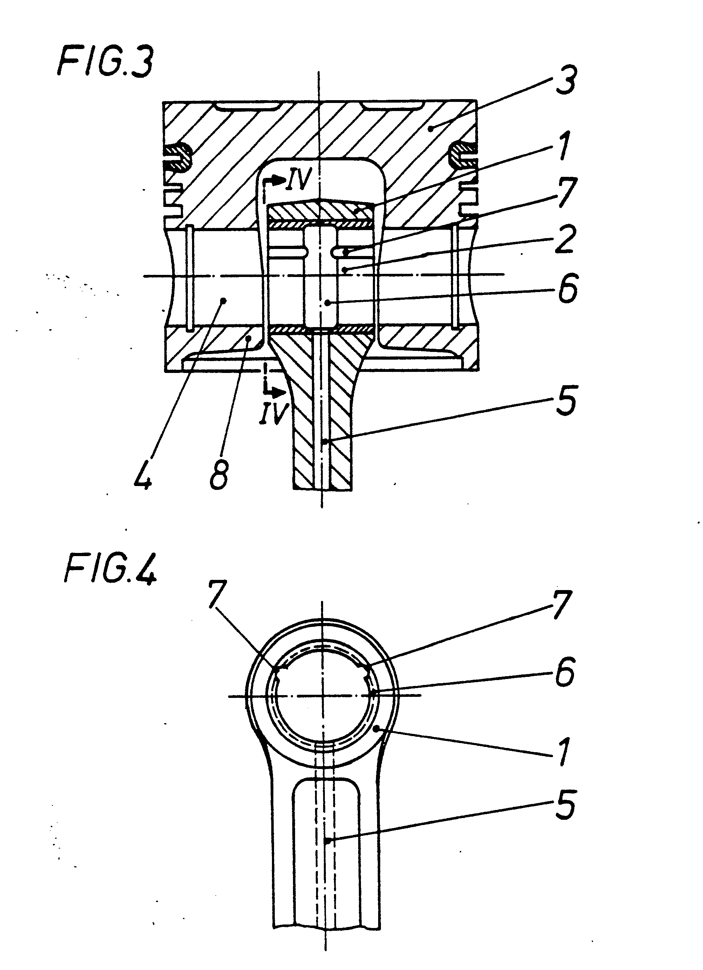

Bei dem Ausführungsbeispiel nach den Figuren 3 und 4 erfolgt die Führung des Pleuelauges 1 in dem Bereich unterhalb der Bolzenachse. In dem Führungsbereich beträgt der Abstand zwischen den gegenüberliegenden Führungsflächen von Pleuelauge 1 und Kolbenbolzennabe 8 jeweils 0,1 mm. In dem nicht an der Führung teilnehmenden Bereich beträgt der entsprechende Abstand zwischen 0,5 und 0,75 mm. Dabei kann der Abstand von der Bolzenachse aus in Richtung Kolbenboden zunehmen.

**Patentansprüche**

1. Kolben-Pleuel-Verbindung für Hubkolben-Verbrennungsmotoren, bei der das Pleuel versehen ist mit Mitteln zur Führung von aus der Kurbelwelle unter Druck zugeführtem Öl in das obere den Kolbenbolzen umfassende Pleuelauge, in dessen den Kolbenbolzen aufnehmenden Bohrung eine umlaufende Nut (6) das zugeführte Öl über in dieser Bohrung in Bolzenlängsrichtung gerichtete, die gesamte Breite des Pleuelauges erfassende Längsnuten (7), an die Kolbenbolzennaben (8) des Kolbens (3) führt, gekennzeichnet durch die Merkmale

a) die Seitenführung des Pleuelauges (1) erfolgt an den Kolbenbolzennaben (8) des Kolbens (3),

b) in jeder Bohrung (4) der Kolbenbolzennaben (8) sind in den oberhalb der durch die Bolzenachse verlaufenden Horizontalebene liegenden Bereich (2) zumindest zum Kolbeninneren hin offene taschenartige Ausnehmungen (9) vorgesehen,

c) die Bohrung (2) des Pleuelauges (1) weist zwei der durchgehenden Längsnuten (7) auf, die an beiden Enden den taschenartigen Ausnehmungen (9) der Kolbenbolzennaben (8) gegenüber liegen.

2. Kolben-Pleuel-Verbindung nach Anspruch 1, gekennzeichnet durch die Merkmale

a) oberhalb der durch die Bolzenachse verlaufenden Horizontalebene liegt zwischen Pleuel und den Bolzennaben (8) ein an der Führung des Pleuels nicht teilnehmender Bereich, in dem der Abstand zwischen Pleuelauge (7) und Kolbenbolzennaben (8) auf jeder Seite des Pleuelauges (1) größer als in dem Führungsbereich ist,

b) der an der Führung nicht teilhabende den größeren Abstand zwischen Pleuelauge (1) und Kolbenbolzennabe (8) aufweisende Bereich grenzt direkt an die Längsnuten (7) in der Bohrung (2) des Pleuelauges (1) an.

3. Kolben-Pleuel-Verbindung nach Anspruch 2, dadurch gekennzeichnet, daß der nicht an der Führung teilhabende Bereich zwischen Pleuelauge (7) und Kolbenbolzennaben (8) sich über den gesamten oberhalb der durch die Bolzenachse verlaufenden Horizontalebene liegenden Raum erstreckt.

4. Kolben-Pleuel-Verbindung für Hubkolben-Verbrennungsmotoren nach Anspruch 3, dadurch gekennzeichnet, daß in den an der Führung des Pleuelauges (1) nicht teilnehmenden Bereichen der Abstand zwischen Pleuelauge (1) und Kolbenbolzennaben (8) auf jeder Seite des Pleuelauges (1) mindestens 25 % größer ist als in den an der Führung teilhabenden Bereichen und einen Wert von 0,75 mm nicht überschreitet.

5. Kolben-Pleuel-Verbindung nach Anspruch 4, dadurch gekennzeichnet, daß der Abstand zwischen den gegenüberliegenden Führungsflächen des Pleuelauges (7) und der Kolbenbolzennabe (9) von beiden Seiten des Pleuelauges (1) jeweils zwischen 0,05 und 0,15 mm mißt.

6. Kolben-Pleuel-Verbindung nach Anspruch 2, dadurch gekennzeichnet, daß an jeder Seite des Pleuelauges (7) zumindest ein an der Führung nicht teilhabender Bereich als ein an die Bolzen angrenzender Längsnuten (7) erfassender nicht bis an den Außenumfang des Pleuelauges reichender Ringabschnitt (12) ausgebildet ist.

7. Kolben-Pleuel-Verbindung nach Anspruch 6, dadurch gekennzeichnet, daß von dem an der Führung nicht teilhabenden Ringabschnitt (12) radiale bis an den Außenumfang des Pleuelauges (1) reichende Kanäle (13) vorgesehen sind.

8. Kolben-Pleuel-Verbindung nach einem der vorhergehenden Ansprüche, dadurch gekennzeichnet, daß sich die taschenartigen Ausnehmungen (9) in den Kolbenbolzennabenbohrungen (4) über deren gesamte Tiefe erstrecken und daß jeweils radial hinter den den Kolbenbolzen in Bolzenachse festlegenden Sicherungsringen Freistiche (11) zur Verbindung der taschenartigen Ausnehmungen (9) mit dem in Bolzenachse hinter den Sicherungsringen liegenden an die Zylinderlauffläche angrenzenden Raum angebracht sind.

9. Kolben-Pleuel-Verbindung für Hubkolben-Verbrennungsmotoren, bei der das Pleuel versehen ist mit Mitteln zur Führung von aus der Kurbelwelle unter Druck zugeführtem Öl in das obere den Kolbenbolzen umfassende Pleuelauge, in dessen den Kolbenbolzen aufnehmenden Bohrung eine umlaufende Nut (6) das zugeführte Öl über in dieser Bohrung in Bolzenlängsrichtung ausgerichtete, die gesamte Breite des Pleuelauges umfassende Längsnuten (7), an die Kolbenbolzennaben (8) des Kolbens (3) führt, gekennzeichnet durch die Merkmale

a) die Seitenführung des Pleuelauges (1) erfolgt an den Kolbenbolzennaben (8) des Kolbens (3),

b) oberhalb der durch die Bolzenachse verlaufenden Horizontalebene liegt zwischen Pleuel und den Bolzennaben (8) ein an der Führung des Pleuels nicht teilnehmender Bereich, in dem der Abstand zwischen Pleuelauge (1) und Kolbenbolzennaben (8) auf jeder Seite des Pleuelauges (1) größer als in dem Führungsbereich ist,

c) der an der Führung nicht teilhabende den größeren Abstand zwischen Pleuelauge (1) und Kolbenbolzennabe (8) aufweisende Bereich grenzt direkt an die Längsnuten (7) in der Bohrung (2) des Pleuelauges (1) an.

10. Kolben-Pleuel-Verbindung nach Anspruch 9, dadurch gekennzeichnet, daß der nicht an der Führung teilhabende Bereich zwischen Pleuelauge (1) und Kolbenbolzennaben (8) sich über den gesamten oberhalb der durch die Bolzenachse verlaufenden Horizontalebene liegenden Raum erstreckt.

11. Kolben-Pleuel-Verbindung für Hubkolben-Verbrennungsmotoren nach Anspruch 10, dadurch gekennzeichnet, daß in den an der Führung des Pleuelauges (1) nicht teilnehmenden Bereichen der Abstand zwischen Pleuelauge (1) und Kolbenbolzennaben (8) auf jeder Seite des Pleuelauges (1) mindestens 25 % größer ist als in den an der Führung teilhabenden Bereichen und einen Wert von 0,75 mm nicht überschreitet.

12. Kolben-Pleuel-Verbindung nach Anspruch 11, dadurch gekennzeichnet, daß der Abstand zwischen den gegenüberliegenden Führungsflächen des Pleuelauges (1) und der Kolbenbolzennabe (8) von beiden Seiten des Pleuelauges (1) jeweils zwischen 0,05 und 0,15 mm mißt.

**Claims**

1. Piston-connecting rod connection for reciprocating internal combustion engines, wherein the connecting rod is equipped with means for guiding oil fed under pressure from the crankshaft into the upper connecting rod boss encompassing the gudgeon pin, in the bore of which boss, seating the gudgeon pin, a circumferential groove (6) guides the supplied oil via longitudinal grooves (7), orientated in this bore in the longitudinal direction of the pin and covering the entire width of the connecting rod boss, to the gudgeon pin bosses (8) of the piston (3), characterized by the features

a) the lateral guidance of the connecting rod boss (1) takes place at the gudgeon pin bosses (8) of the piston (3),

b) in each bore (4) of the gudgeon pin bosses (8), pocketlike recesses (9), open at least towards the interior of the piston, are provided in the region (2) situated above the horizontal plane passing through the pin axis,

c) the bore (2) of the connecting rod boss (1) possesses two of the continuous longitudinal grooves (7), which are situated at both ends opposite the pocket-like recesses (9) of the gudgeon pin bosses (8).

2. Piston-connecting rod connection according to Claim 1, characterized by the features

a) above the horizontal plane passing through the pin axis, there lies between the connecting rod and the gudgeon pin bosses (8) a region that doen not participate in the guidance of the connecting rod, in which the distance between connecting rod boss (1) and gudgeon pin bosses (8) is greater on each side of the connecting rod boss (1) than in the guide region,

b) the region that does not participate in the guidance and has a greater distance between connecting rod boss (1) and gudgeon pin bosses (8) directly adjoins the longitudinal grooves (7) in the bore (2) of the connecting rod boss (1).

3. Piston-connecting rod connection according to Claim 2, characterized in that the region between connecting rod boss (1) and gudgeon pin bosses (8) that does not participate in the guidance extends over the entire space situated above the horizontal plane passing through the pin axis.

4. Piston-connecting rod connection for reciprocating internal combustion engines according to Claim 3, characterized in that, in the regions that do not participate in the guidance of the connecting rod boss (1), the distance between connecting rod boss (1) and gudgeon pin bosses (8) on each side of the connecting rod boss (1) is at least 25 % larger than in the regions that participate in the guidance and does not exceed a value of 0.75 mm.

5. Piston-connecting rod connection according to Claim 4, characterized in that the distance between the opposite guide surfaces of the connecting rod boss (1) and of the gudgeon pin boss (8) on each side of the connecting rod boss (1) lies between 0.05 and 0.15 mm.

6. Piston-connecting rod connection according to Claim 2, characterized in that, at each side of the connecting rod boss (1), at least one region that does not participate in the guidance is constructed as an annular portion (12), adjoining the pins, comprising longitudinal grooves (7) and not extending as far as the outer circumference of the connecting rod boss.

7. Piston-connecting rod connection according to Claim 6, characterized in that radial ducts (13) are provided extending from the annular portion (12) that does not participate in the guidance as far as the outer circumference of the connecting rod boss (1).

8. Piston-connecting rod connection according to one of the preceding Claims, characterized in that the pocket-like recesses (9) extend, in the gudgeon pin boss bores (4), through their entire depth and that, radially behind each of the securing rings which secure the gudgeon pin in the pin axis, free cuts (11) are formed for connecting the pocketlike recesses (9) with the space situated in the pin axis behind the securing rings and adjoining the cylinder bore surface.

9. Piston-connecting rod connection for reciprocating internal combustion engines, wherein the connecting rod is equipped with means for guiding oil fed under pressure from the crankshaft into the upper connecting rod boss encompassing the gudgeon pin, in the bore of which boss, seating the gudgeon pin, a circumferential groove (6) guides the supplied oil via longitudinal grooves (7), orientated in this bore in the longitudinal direction of the pin and covering the entire width of the connecting rod boss, to the gudgeon pin bosses (8) of the piston (3), characterized by the features

a) the lateral guidance of the connecting rod boss (1) takes place at the gudgeon pin bosses (8) of the piston (3),

b) above the horizontal plane extending through the pin axis, there lies between connecting rod and the gudgeon pin bosses (8) a region that does not participate in the guidance of the connecting rod, in which the distance between connecting rod boss (1) and gudgeon pin bosses (8) on each side of the connecting rod boss (1) is greater than in the guide region,

c) the region that does not participate in the guidance and which has the greater distance between connecting rod boss (1) and gudgeon pin boss (8) directly adjoins the longitudinal grooves (7) in the bore (2) of the connecting rod boss (1).

10. Piston-connecting rod connection according to Claim 9, characterized in that the region between connecting rod boss (1) and gudgeon pin bosses (8) that does not participate in the guidance extends over the entire space situated above the horizontal plane passing through the pin axis.

11. Piston-connecting rod connection for reciprocating internal combustion engines according to Claim 10, characterized in that, in the regions that do not participate in the guidance of the connecting rod boss (1), the distance between connecting rod boss (1) and gudgeon pin bosses (8) on each side of the connecting rod boss (1) is at least 25 % greater than in the regions that participate in the guidance and does not exceed a value of 0.75 mm.

12. Piston-connecting rod connection according to Claim 11, characterized in that the distance between the opposite guide surfaces of the connecting rod boss (1) and gudgeon pin boss (8) on each side of the connecting rod boss (1) lies between 0.05 and 0.15 mm.

**Revendications**

1. Liaison piston-bielle pour moteurs à combustion interne, dans laquelle la bielle présente un agencement destiné à conduire l'huile, amenée sous pression du vilebrequin, dans le pied supérieur de bielle qui entoure l'axe de piston, et dans lequel une gorge (6) annulaire de l'alésage logeant cet axe guide l'huile amenée, par des rainures (7) longitudinales formées dans cet alésage dans le sens de la longueur dudit axe et ayant toute la largeur du pied de bielle, vers les bossages (8) du piston (3) de liaison, caractérisée par les particularités suivantes :

a) le guidage latéral du pied (1) de bielle est effectué sur les bossages (8) de guidage de l'axe du piston (3) ;

b) l'alésage (4) de chaque bossage (8) comporte, au moins dans la zone (2) située au-dessus du plan horizontal passant par l'axe géométrique de l'axe de piston, des cavités (9) en forme de poches débouchant vers l'intérieur du piston ;

c) l'alésage (2) du pied de bielle (1) comporte deux des rainures (7) longitudinales continues, qui se font face aux deux extrémités des cavités (9) des bossages (8).

2. Liaison piston-bielle selon la revendication 1, caractérisée par les particularités suivantes :

a) il y a, au-dessus du plan horizontal passant par l'axe géométrique de l'axe de piston et entre la bielle et les bossages (8), une zone qui ne participe pas au guidage de la bielle et dans laquelle la distance comprise entre ce pied (1) de bielle et ces bossages (8), de chaque côté dudit

pïed '(1) de bielle, est plus grande que dans la zone de guidage ;

b) la zone qui ne participe pas au guidage et qui présente une distance plus grande entre le pied (1) de bielle et les bossages (8) est directement adjacente aux rainures (7) longitudinales de l'alésage (2) de ce pied (1) de bielle.

3. Liaison piston-bielle selon la revendication 2, caractérisée en ce que la zone située entre le pied (1) de bielle et les bossages (8) de guidage de l'axe de piston, et qui ne participe pas au guidage, couvre tout l'espace situé au-dessus du plan horizontal passant par l'axe géométrique de cet axe de piston.

4. Liaison piston-bielle pour moteur à combustion interne selon la revendication 3, caractérisé en ce que dans les zones qui ne participent pas au guidage du pied (1) de bielle, la distance comprise entre ce pied (1) de bielle et les bossages (8) de guidage de l'axe de piston, de chaque côté dudit pied (1) de bielle, est plus grande d'au moins 25 % que dans les zones qui participent au guidage, et elle n'est pas supérieure à 0,75 mm.

5. Liaison piston-bielle selon la revendication 4, caractérisée en ce que la distance comprise entre les surfaces de guidage, qui se font face, du pied (1) de bielle et des bossages (8) du piston est, de chaque côté de ce pied (1) de bielle, comprise entre 0,05 et 0,15 mm.

6. Liaison piston-bielle selon la revendication 2, caractérisée en ce que, il est formé de chaque côté du pied (1) de bielle, au moins une zone qui ne participe pas au guidage et qui est constituée par un segment annulaire (12) atteignant les rainures (7) longitudinales adjacentes aux bossages et n'arrivant pas à la périphérie de ce pied (1) de bielle.

7. Liaison piston-bielle selon la revendication 6, caractérisée en ce que des canaux (13) radiaux, qui débouchent sur la périphérie du pied (1) de bielle partent du segment annulaire (12) qui ne participe pas au guidage.

8. Liaison piston-bielle selon l'une des revendications précédentes, caractérisée en ce que les cavités (9) des alésages (4) des bossages (8) de guidage de l'axe de piston ont toute la profondeur de ces alésages et en ce que, radialement, derrière les joncs annulaires qui fixent l'axe de piston dans l'axe du piston, il est formé des rainures (11) de dégagement destinées à faire communiquer ces cavités (9) avec l'espace situé au-delà de ces joncs et adjacent à la surface de portée du cylindre.

9. Liaison piston-bielle pour moteurs à combustion interne, dans laquelle la bielle comporte un agencement destiné à conduire l'huile amenée sous pression du vilebrequin dans le pied supérieur de bielle qui entoure l'axe de piston et dans lequel une gorge (6) annulaire continue de l'alésage logeant cet axe guide l'huile amenée, par des rainures (7) longitudinales formées dans cet alésage dans le sens de la longueur dudit axe et ayant toute la largeur du pied de bielle, vers les bossages (8) du piston (3), liaison caractérisée par les particularités suivantes :

a) le guidage latéral du pied (1) de bielle est effectué sur les bossages (8) du piston (3) ;

b) il y a, au-dessus du plan horizontal qui passe par l'axe géométrique de l'axe de piston et entre la bielle et les bossages (8), une zone qui ne participe pas au guidage de la bielle et dans laquelle la distance comprise entre le pied (1) de bielle et ces bossages (8), de chaque côté de ce pied (1) de bielle, est plus grande que dans la zone de guidage ;

c) la zone, qui ne participe pas au guidage et qui présente une plus grande distance entre le pied (1) de bielle et les bossages (8), est directement adjacente aux rainures (7) longitudinale de l'alésage (2) de ce pied (1) de bielle.

10. Liaison piston-bielle selon la revendication 9, caractérisée en ce que la zone, qui est située entre le pied (1) de bielle et les bossages (8) de guidage de l'axe de piston et qui ne participe pas au guidage, couvre tout l'espace situé au-dessus du plan horizontal passant par l'axe géométrique de cet axe de piston.

11. Liaison piston-bielle pour moteur à combustion interne selon la revendication 10, caractérisé en ce que, dans les zones qui ne contribuent pas au guidage du pied (1) de bielle, la distance comprise entre ce pied (1) de bielle et les bossages (8) de guidage de l'axe de piston est plus grande d'au moins 25 % que dans les zones qui contribuent au guidage, et elle n'est pas supérieure à 0,75 mm.

12. Liaison piston-bielle selon la revendication 11, caractérisée en ce que la distance comprise entre les surfaces de guidage qui se font face du pied (1) de bielle et des bossages (8) de guidage de l'axe de piston est comprise, de chaque côté de ce pied (1) de bielle, entre 0,05 et 0,15 mm.

0 095 052

FIG.1

FIG.2

FIG.3

FIG.4